(19) Europäisches Patentamt
European Patent Office
Office européen des brevets

(11) **EP 2 774 494 B1**

(12) **EUROPEAN PATENT SPECIFICATION**

(45) Date of publication and mention
of the grant of the patent:
**02.01.2019 Bulletin 2019/01**

(51) Int Cl.:
*A23D 7/015* (2006.01)    *A23D 7/02* (2006.01)
*A23D 7/005* (2006.01)    *A23L 29/262* (2016.01)
*A23L 27/60* (2016.01)    *A23L 33/20* (2016.01)

(21) Application number: **12844688.7**

(22) Date of filing: **05.11.2012**

(86) International application number:
**PCT/KR2012/009254**

(87) International publication number:
**WO 2013/066137 (10.05.2013 Gazette 2013/19)**

(54) **LOW FAT MAYONNAISE COMPOSITION AND METHOD FOR PRODUCING SAME**

FETTARME MAYONNAISEZUSAMMENSETZUNG UND HERSTELLUNGSVERFAHREN DAFÜR

COMPOSITION DE MAYONNAISE PAUVRE EN MATIÈRE GRASSE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011   KR 20110114223**

(43) Date of publication of application:
**10.09.2014   Bulletin 2014/37**

(73) Proprietor: **LOTTE Fine Chemical Co., Ltd.
Ulsan, 44714 (KR)**

(72) Inventors:
• **LIM, Eun Ji
Daegu 703-840 (KR)**
• **LEE, Eun Jung
Seoul 137-796 (KR)**
• **BAEK, Hyon Ho
Incheon 406-722 (KR)**
• **LEE, Hyun Woo
Incheon 404-732 (KR)**

(74) Representative: **Kador & Partner PartG mbB
Corneliusstraße 15
80469 München (DE)**

(56) References cited:
**EP-A1- 0 441 494        EP-A2- 0 477 827
JP-B2- 2 915 044         KR-A- 20040 074 558
KR-A- 20070 091 715      KR-A- 20070 091 715
US-A- 4 238 520          US-A- 5 759 609**

EP 2 774 494 B1

## Description

BACKGROUND

### 1. Field of the Invention

The present invention relates to a low fat mayonnaise composition and a method of preparing the same, according to claims 1 to 7, and more particularly, to a low fat mayonnaise composition and a method of preparing the same, in which without using an egg, cellulose ether and an excipient are used as a fat substitute such that an oil and fat content in the low fat mayonnaise composition is reduced to 1/2 or less, and the low fat mayonnaise composition is stable at various temperatures.

### 2. Discussion of Related Art

Mayonnaise is one of representative high fat foods having a fat content of 80% or more, and a food in a type of O/W emulsion, in which lipoprotein and lecithin, that is an egg or a yolk component, have an emulsifying capacity and thus surround a fat component, thereby allowing the fat component to be dispersed in water.
In recent years, combined with an abundant economic life, a dietary life is changed and a fat intake is increased. Therefore, morbidity rates of all kinds of adult diseases, such as obesity, high blood pressure, and a cardiac disorder are increased, and in this regard, interest in a health and nutrition of a consumer is increased. For this reason, naturally, decrease in a fat intake, and low-calorie and low-fat foods are required. Therefore, research is being carried out to effectively reduce calorie using a material capable of substituting a fat component in foods.
Chun, et. al. (Korean J. Food Sci. Tech., V27, pp839-844) reported a low-calorie mayonnaise, in which an oil and fat content and calorie are reduced by about 50% and 20%, respectively, as compared with the conventional mayonnaise, by adding a modified starch as a fat substitute. However, since in a case where a large quantity of starch is added instead of a fat in order to reduce calorie as described above, the emulsifying capacity of the whole of product is decreased, there are problems in that a fat component and an aqueous solution layer are easily separated, and thus it can cause the product to have reduced quality. In addition, a study on securing shape retention to be the same level as that of the conventional mayonnaise is insufficient.
Meanwhile, it is known that an egg generally is a perfect food having all kinds of nutrients together with milk, and is used as an emulsifier at the time of producing mayonnaise. The yolk of an egg contains averagely 210 mg of cholesterol. It can be known that such an amount is higher than the recommended allowance for cholesterol, that is, 200 mg/2,000 kcal, recommended by WHO. In addition, it has been reported that ovalbumin and ovomucoid among the proteins in the egg white are allergens, an allergy inducing substance. Therefore, recently, in addition to an attempt to produce mayonnaise with removing cholesterol from the yolk in an egg or without using an egg, various attempts for securing heat resistance or cold resistance have been reported.
In Korean Patent No. 288012, it is described that in order to reduce cholesterol in the yolk of an egg, a frozen liquid egg prepared by using β-cyclodextrin is used. However, with such a method, cholesterol cannot be completely removed from the yolk of an egg, and also the allergens, and the like included in an egg cannot be removed.
In Korean Patent No. 217199, a method of producing mayonnaise is disclosed, in which the method includes mixing 1 to 10 wt% of cooking oil, 1 to 20 wt% of the white of an egg, 0.25 to 5 wt% of microcrystalline cellulose, and 1 to 15 wt% of polydextrose with 40 to 90 wt% of water, with respect to the total weight. However, emulsion stability is reduced though the white of an egg used, and problems such as oil separation occurs as time passes.
Korean Patent Publication No. 1995-0016982 discloses a mayonnaise composition, in which cold resistance is increased by changing fats to be used and also controlling a size of a fat globule through a process such as vacuum emulsification, and a method thereof. However, such a composition is not free from an egg component and there are no significant differences between the composition and the conventional mayonnaise in terms of calorie and an oil and fat content. US 5 759 609A relates to a low-fat whipped topping having good performance and organoleptic properties comprising on a weight basis about 0.0% to 7.0% fat, 0.20% to 0.8% emulsifiers, 1.0% to 1.75% stabilizers and 40% to 55% water soluble carbohydrates. The low-fat whipped topping has a caloric density of from 1.5 to 2.5 calories per gram and an overrun of at least 300%.
Therefore, it is difficult to expect significantly different effects.
According to these conventional methods, it is unrealized to implement a low fat mayonnaise with, for example, a reduced oil and fat content, an exclusion of use of an egg, and secured shape retention.
In order to solve the above-mentioned problems of the conventional techniques, the present inventors researched on maintaining shape retention of mayonnaise, reducing an oil and fat content, and implementing possibility with a vegetable raw material. In the meantime, the present inventors found that a mayonnaise product having such a concept can be prepared by using cellulose ether and an excipient, and then completed the present invention.

SUMMARY OF THE INVENTION

An object of the present invention is to provide a low fat mayonnaise composition, in which without using an egg, an oil and fat content in the low fat mayonnaise composition is reduced to 1/2 or less, and the low fat mayonnaise composition is stable at various temperatures.

Another object of the present invention is to provide a method of producing a low fat mayonnaise composition, in which without using an egg, an oil and fat content in the low fat mayonnaise composition is reduced to 1/2 or less, and the low fat mayonnaise composition is stable at various temperatures.

In order to achieve the first object, the present invention is to provide a low fat mayonnaise composition in which an emulsion composed of vegetable oil is reduced to 50 wt% or less with respect to the total weight of the composition and also cellulose ether and an excipient are included as a fat substitute.

According to the mayonnaise composition of the present invention, the cellulose ether is preferably included in a range of 1 to 3 wt% with respect to the total weight of the mayonnaise composition and the excipient is included in a range of 1 to 20 wt% with the respect to the total weight of the mayonnaise composition.

The cellulose ether is hydroxypropylmethyl cellulose, and has a structure, in which 19 to 30% of a methoxyl group and 4 to 20% of a hydroxypropyl group are substituted at a main chain of the cellulose.

The excipient is preferably selected from an isolated soy protein, powdered skim milk, or starch.

The low fat mayonnaise composition according to the present invention may further include a stabilizer.

The stabilizer is preferably included in a range of 0.05 to 1 wt% with respect to the total weight of the mayonnaise composition, and is preferably at least one selected from the group consisting of xanthan gum, carrageenan, locust bean gum, guar gum, alginic acid, and agar.

In order to achieve the second object of the present invention, the present invention is to provide a method of producing a low fat mayonnaise composition, in which the method includes hydrating cellulose ether and an excipient; mixing the hydrate thus obtained with an emulsion composed of vegetable oil, and primarily stirring the mixture; mixing the primarily stirred mixture thus obtained with sugar, salt, or vinegar; and the secondarily stirring the mixture.

The method of producing a low fat mayonnaise composition according to the present invention, the kinds and contents of the cellulose ether and excipient are the same as described above.

In the hydration after adding the excipient to the cellulose ether, the cellulose ether and excipient may be mixed in advance and then hydrated; or the cellulose ether may be hydrated, and then the excipient may be mixed to the hydrated cellulose ether and then hydrated.

In the respective steps, adding a stabilizer may be further included, and especially, it is preferable to further add a stabilizer in the mixing of sugar and salt.

In addition, pH of the final product is preferably within a range of 4.5 to 5.5.

BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:

FIG. 1 is a flowchart illustrating a method of producing low fat mayonnaise using cellulose ether and an excipient according to an embodiment of the present invention;
FIG. 2 is a graph illustrating turbidity according to pH of 11S (glycinin) and 7S (β-conglycinin) as a main soy protein, and as the absorbance is high, the precipitation of proteins is high;
FIG. 3 illustrates viscosity variation according to the changes of temperature of HPMC used as a fat substitute according to the present invention;
FIG. 4 is a photography illustrating the changes of shape retention and oil separation in 60 minutes at the temperature of 75°C after producing the mayonnaises from Examples according to the present invention and Comparative Examples;
FIG. 5 is a graph illustrating a result of measuring the storage modulus (G') of the mayonnaises produced in Examples according to the present invention and Comparative Examples;
FIG. 6 is a graph illustrating a result of measuring the loss modulus (G") of the mayonnaises produced in Examples according to the present invention and Comparative Examples; and
FIG. 7 is a graph illustrating a result of measuring the complex viscosities of the mayonnaises produced in Examples according to the present invention and Comparative Examples.

DETAILED DESCRIPTION OF EXEMPLARY EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

Hereinafter, a low fat mayonnaise composition including cellulose ether and an excipient according to an embodiment of the present invention and a method of producing the same will be described in more detail.

According to an embodiment of the present invention, the low fat mayonnaise composition allows an emulsion composed of vegetable oil to be 50 wt% or less with respect to the total weight of the composition, and also includes cellulose ether and an excipient as a fat substitute.

Such an emulsion is composed of vegetable oil, for example, soybean oil, and the like, and may be included in a range of 50 wt% or less with respect to the total weight of the composition, thereby realizing to be low fat, and preferably included within a range of 20 to 50 wt%.

The cellulose ether is being used for a food composition and a producing process in order to provide physical properties, such as a thickening property, freezing/thawing stability, a lubrication property, a moisturizing property, a moisture releasing property, a density property, a form maintaining property, emulsifiability, a binding property, a suspension property, and a gelation property.

The preferable cellulose ether used in the present invention is hydroxypropylmethyl cellulose that is a cellulose-based dietary fiber, and has a chemical structure, in which a methoxyl group and a hydroxypropyl group are substituted at a main chain of the cellulose. With the properties of such a substituent, the cellulose ether has a water-soluble property. Especially, the methoxyl group preferably has the structure, in which 19 to 30% thereof is substituted, and the hydroxypropyl group preferably has the structure, in which 4 to 12% thereof is substituted. In addition, the cellulose ether is swelled in water thereby producing a transparent viscous suspension, and has no smell and no taste. Therefore, it is used as food additives having the functions of an emulsifying agent, a thickening agent, a stabilizer, and the like.

The cellulose ether may be included in a range of 1 to 3 wt% with respect to the total weight of the low fat mayonnaise composition. When the content of the cellulose ether is less than 1 wt% with respect to the total weight, the mayonnaise produced by using the composition may have low viscosity and deteriorated phase stability of the mayonnaise. When it exceeds 3 wt%, it may lose physical properties and tactility of the conventional mayonnaise.

A process of hydrating the cellulose ether is firstly required to produce a vegetable low fat mayonnaise, and at this time, the required viscosity of the solution is preferably 200 to 450 $\times$ 10$^2$ cps at room temperature.

The excipient is included to improve shape retention and stability of mayonnaise at various temperatures, and the preferable examples of the excipient may include an isolated soy protein, powdered skim milk, starch, and the like.

The powdered skim milk is produced by isolating and removing a fat from milk, and then drying to make powder. The powdered skim milk has high oxidation stability and can be stored for a long period of time. In addition, the powdered skim milk is being used for diet foods or fortifying nutrient as a low-fat, high-protein, and high-calcium product, and also for the foods using its thickening strength, binding strength, and emulsifying capacity.

Especially, it is more preferable to use the isolated soy protein as an excipient. The isolated soy protein means the protein isolated from a soybean. A protein is a complex of about 20 amino acids, and some amino acids thereamong have an electrical charge according to a kind of its functional group and function as an acid or a base. Therefore, the protein that is a complex thereof has a positive charge or negative charge of a specific value that is referred to as a net charge. In general, as the value of the charge is high, it may be hydrophilic. In addition, a protein may gain or lose H$^+$ according to a surrounding pH, and for this reason, the value of the net charge may be increased or decreased. As the value of the net charge approaches to 0, it tends to decrease the solubility of the protein and cause precipitation. The pH in case of being 0 of the net charge of the protein is referred to as an isoelectric point (pI).

The general protein isolation in foods including milk and soy proteins is performed by using the principle of an isoelectric point through an adjustment of pH.

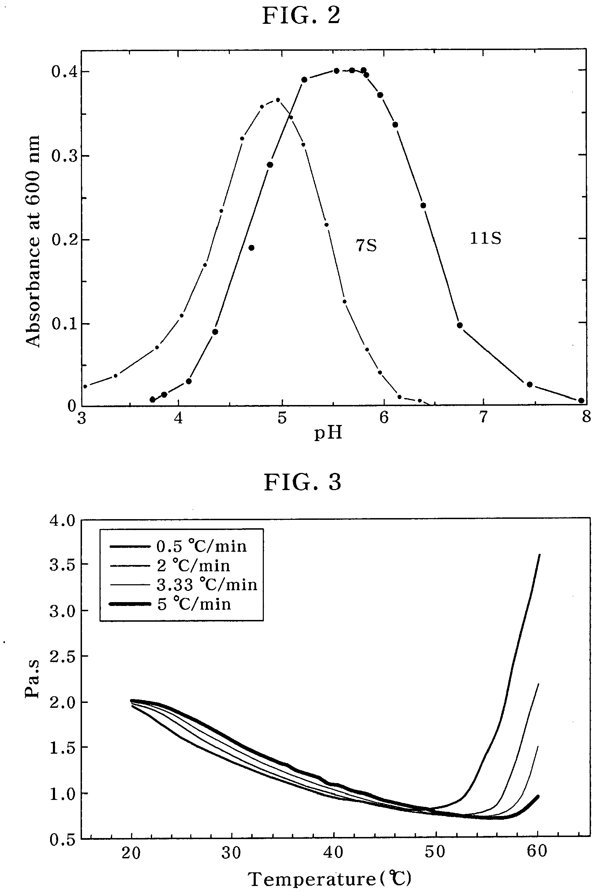

In case of 7S as an example of soy proteins, the precipitation may occur at pH 4.0 to 5.6 and in case of 11S, the precipitation may occur at pH 4.4 to 6.8 (see FIG. 3, and the book by KeShun Liu [Soybeans, Chemistry, Technology, and Utilization, An Aspen Publication, 1999, p41]). In case of isolated soy proteins that are commercially produced, the protein precipitate obtained at the level of pH 4.5 is neutralized and powdered to obtain the isolated soy proteins. In general, the isolated soy protein is used for various foods such as drinks, processed meat, bread products and confectionery, and is excellent in emulsifying capacity, and has gel formation ability and water binding and holding capacity.

The isolated soy protein has the above mentioned properties, and thus can help in effective emulsification of fat components in the present invention. In addition, since mayonnaise is generally an acid food, when the pH of the product approaches the isoelectric point of an isolated soy protein, its viscosity is increased according to an aggregation and precipitation of proteins, and thus it may positively affect the final physical properties of the product.

The isolated soy protein used for the mayonnaise composition according to the present invention is a protein isolated from a soybean, and is separated into 7S and 11S experimentally, and is used as a powdered product in practice having the protein content of 90% or more.

The excipient may be included in a range of 1 to 20 wt% with respect to the total weight of the mayonnaise composition. When the excipient is used in an amount of less than 1 wt%, its shape retention is decreased and flowability is increased, and thus it is difficult to implement the desired physical properties, while when the amount of excipient used exceeds 20 wt%, its viscosity may be excessively increased thereby causing problems that are significantly different from the general physical properties of the mayonnaise.

In order to produce low fat mayonnaise according to the present embodiment, the general additional components such as sugar, salt, or vinegar which are generally used in the art, are added.

The low fat mayonnaise composition according to the present invention includes 20 to 50 wt% of vegetable oil, 1 to 2 wt% of sugar, 1 to 2 wt% of salt, 3 to 10 wt% of vinegar, 1 to 3 wt% of cellulose ether, 5 to 10 wt% of an isolated soy protein, and water as the remainder with respect to the total weight of the composition.

The low fat mayonnaise composition according to the present invention may further include a stabilizer if necessary.

The stabilizer may be further included in order to improve physical properties and tactility of the mayonnaise, and the preferable example of the stabilizer may include xanthan gum, carrageenan, locust bean gum, guar gum, alginic acid, agar, and the like. Especially, the xanthan gum is a food additive capable of increasing viscosity and improving emulsion stability and used as a thickening agent, a stabilizer, an emulsifying agent, a molding agent, and the like. The xanthan gum is a pale yellow powder which is dissolved easily in water, and its aqueous solution is neutral and dissolved in water, but not dissolved in ethanol. The xanthan gum is dispersed in cold water and dissolved in hot water; the viscosity of xanthan gum solution has no difference according to the dissolution temperatures; the viscosity is not decreased according to pH; and is excellent in heat resistance.

The content of the stabilizer may be included in a range of 0.05 to 1 wt% with respect to the total weight of the composition. However, when it exceeds 1 wt%, its viscosity is excessively high, thereby decreasing work efficiency and losing texture of the conventional mayonnaise. Therefore, the content of the stabilizer is preferably used in an amount of 1 wt% or less.

Hereinafter, the present invention will be described in more detail with reference to the drawings.

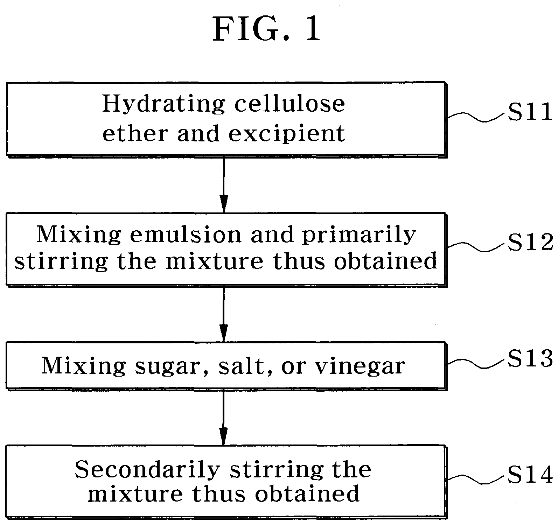

FIG. 1 is a flowchart illustrating a method of producing low fat mayonnaise according to an embodiment of the present invention.

Referring to FIG. 1, the method according to the present embodiment includes hydrating cellulose ether and an excipient (S11); mixing the hydrate thus obtained with an emulsion composed of vegetable oil, and then primarily stirring the mixture thus obtained (S12); mixing the primarily stirred mixture with sugar, salt, or vinegar (S13); and secondarily mixing the mixture thus obtained (S14).

The hydrating of the cellulose ether and excipient (S11) allows the hydrated cellulose ether to have physical properties that are similar to those of a fat by including water inside of the cellulose ether and excipient. At this time, the cellulose ether is preferably included in a range of 1 to 3 wt% with respect to the total weight of the mayonnaise composition. In this case, the viscosity of the hydrated cellulose ether added as a fat substitute is preferably 200 to 450 $\times$ $10^2$ cps at room temperature. In addition, the excipient is preferably included in a range of 1 to 20 wt% with respect to the total weight of the mayonnaise composition.

In the hydrating of the cellulose ether and excipient, the hydration may be performed by mixing the hydrated cellulose ether with the excipient or may be performed by mixing the cellulose ether and excipient in advance before hydrating, and then adding the mixture thus obtained to water.

The hydration is preferably performed by stirring at 5,000 to 10,000 rpm for about 3 minutes and 5 minutes.

Since then, the primary stirring (S12) is performed by mixing an emulsion composed of vegetable oil. In this case, it is preferably stirred at 5,000 to 10,000 rpm for about 3 to 8 minutes. The emulsion composed of the vegetable oil is preferably used in a range of 50 wt% or less, more preferably 20 to 50 wt% with respect to the total weight of the mayonnaise composition.

Subsequently, sugar, salt, or vinegar is mixed with the primarily stirred mixture (S13). In this process, sugar and salt are mixed as a sweetener. In this case, the salt may be included in the range that is generally used in the related art. It is preferable that the sugar is 1 to 2 wt% and the salt is 1 to 2 wt% with respect to the total weight of the mayonnaise composition. The vinegar may be included in the range that is generally used in the related art, and it is preferable to include in a range of 3 to 10 wt% with respect to the total weight of the mayonnaise composition. Similarly, it is required to stir for mixing, and the stirring is preferably performed at 5,000 to 10,000 rpm for 30 seconds to 5 minutes.

In addition, in this process, a stabilizer may be selectively mixed. Meanwhile, it may be required to stir for mixing in this process (S13). At this time, the stirring is preferably performed at 5,000 to 10,000 rpm for about 3 minutes.

Finally, the mixtures are secondarily stirred (S14). At this case, the stirring is performed at 5,000 to 10,000 rpm for 1 to 2 minutes to complete mayonnaise.

Hereinafter, the present invention will be described in more detail with reference to Examples.

**Experimental Example 1: Change of viscosity of cellulose ether according to temperature variation**

In order to confirm the changes of HPMC's viscosity according to temperature variation, HPMC, which is used as a fat substitute in the present invention, was prepared in 10% aqueous solutions, and then the change of viscosity of HPMC solutions according to the temperature variation was measured through a cup-cone type Rheometer (a shear rate: 5/s) by heating HPMC solutions at the rates of 0.5°C per minute, 2°C per minute, 3.33°C per minute, and 5°C per minute, respectively. The results thus obtained are illustrated in FIG. 3.

As illustrated in FIG. 3, it can be confirmed that up to 50°C, the viscosity is decreased as the temperature is increased like the general hydrocolloid or thickening agents, but at 50°C to 60°C or more, there is a gelling point in which the viscosity is sharply increased. Due to such properties of the cellulose ether, it can be possible to implement mayonnaise having shape retention at a high temperature.

**Examples 1 to 10**

The mayonnaises having compositions listed in the following Table 1 were prepared as the following method.

First, hydroxypropylmethyl cellulose (HPMC) was mixed with purified water, and stirred at 8,000 rpm for 5 minutes to hydrate into a 5% solution of hydroxypropylmethyl cellulose. The 5% solution of hydroxypropylmethyl cellulose thus obtained was added with an isolated soy protein and then stirred at 8,000 rpm for 5 minutes to completely hydrate. Then, while vegetable oil (soybean oil) was slowly added, the mixture thus obtained was stirred at 8,000 rpm for 3 minutes. Subsequently, sugar, salt, or a stabilizer (xanthan gum) was added at the same speed for 1 minute, and then vinegar was added and mixed for 30 seconds. After completing the emulsification, the mixture thus obtained was stirred at 8,000 rpm for 1 minute to complete mayonnaise. The hydroxypropylmethyl cellulose used in the present Examples was HPMC manufactured by SAMSUNG FINE CHEMICALS CO., LTD, which is produced by using the method disclosed in Korean Patent Publication No. 20100118800.

**Comparative Example 1**

Mayonnaise with the yolk of an egg having composition listed in the following Table 1 was prepared by using the following method.

The yolk and the white of an egg, and vegetable oil (soybean oil) were added and stirred at 8,000 rpm for 8 minutes. Then, salt and sugar were added and then mixed at the same speed for 1 minute. Subsequently, vinegar was added and mixed for 30 seconds. After completing the emulsification, the mixture thus obtained was stirred at 8,000 rpm for 1 minute to prepare mayonnaise.

**Comparative Example 2**

Mayonnaise having composition listed in the following Table 1 was prepared by using the same method as Example 4.

[Table 1]

| Material | Com. Example 1 | Com. Example 2 | Examples 1 | 2 | 3 | 4 | 5 | 6 | 7 | 8 | 9 | 10 |
|---|---|---|---|---|---|---|---|---|---|---|---|---|
| Egg | 14 | | | | | | | | | | | |
| HPMC (5% aqueous solution) | | | 54 | 53.5 | 20 | 20 | 20 | 20 | 20 | 20 | 22 | 26 |
| Powered skim milk | | | 10 | 10 | | | | | | | | |
| Isolated soy protem | | 8 | | | 8 | 8 | 8 | 8 | 8 | 8 | 7 | 9 |
| Soybean oil | 80 | 40 | 30 | 30 | 40 | 40 | 40 | 40 | 40 | 40 | 40 | 35 |
| Xanthan gum | | | | 0.5 | | | | | | | | |

(continued)

| Material | Com. Example 1 | Com. Example 2 | Examples | | | | | | | | | |
|---|---|---|---|---|---|---|---|---|---|---|---|---|
| | | | 1 | 2 | 3 | 4 | 5 | 6 | 7 | 8 | 9 | 10 |
| Vinegar | 3 | 3 | 3 | 3 | 2 | 3 | 4 | 5 | 6 | 7 | 6.2 | 7 |
| Salt | 1 | 1 | 1 | 1 | 1 | 1 | 1 | 1 | 1 | 1 | 1 | 1 |
| Sugar | 2 | 2 | 2 | 2 | 2 | 2 | 2 | 2 | 2 | 2 | 2 | 2 |
| Purified water | | 46 | | | 27 | 26 | 25 | 24 | 23 | 22 | 21.8 | 20 |
| Total | 100 | 100 | 100 | 100 | 100 | 100 | 100 | 100 | 100 | 100 | 100 | 100 |

## Experimental Example 2: Measurement of viscosity of mayonnaise

The viscosities of the mayonnaises prepared from Examples 2, 3, 7, and 8 and Comparative Example were measured using a viscometer (Digital Viscometer Brookfield DV-II, USA). The results thus obtained are listed in the following Table 2.

[Table 2]

| | Com. Example 1 | Example 2 | Example 3 | Example 7 | Example 8 |
|---|---|---|---|---|---|
| Viscosity(cP) | $1.27 \times 10^5$ | $4.72 \times 10^5$ | $7.57 \times 10^5$ | $6.12 \times 10^5$ | $7.20 \times 10^5$ |

From the above-mentioned results, it could be confirmed that in case of mayonnaise added with HPMC, its viscosity was $1.28 \times 10^5$ cP that is not significantly different from the viscosity of a commercially available mayonnaise, that is, $1.27 \times 10^5$ cP ($p > 0.05$). On the other hand, in case of adding an excipient to the mayonnaise added with HPMC, its viscosity was increased by about 1.5 to 6 times as compared with the commercially available mayonnaise.

## Experimental Example 3: Measurements of heat resistance, cold resistance, and emulsion stability of mayonnaise

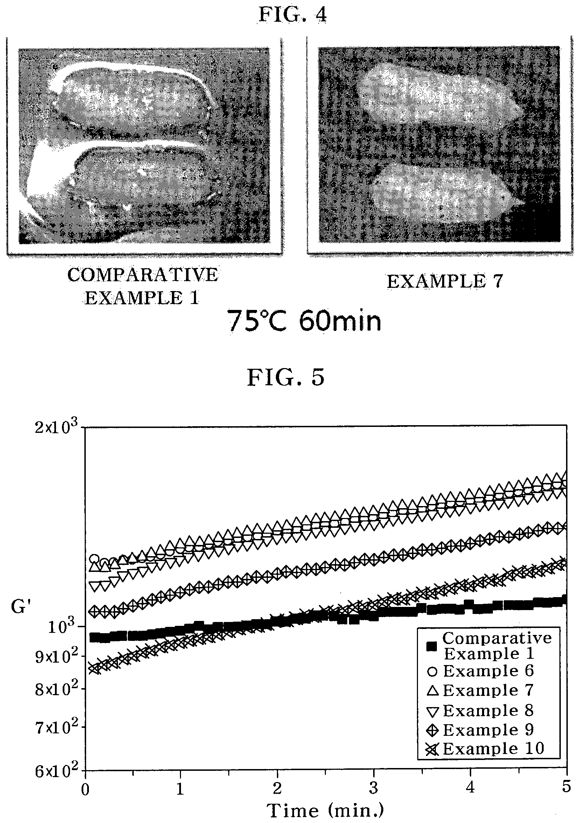

Heat resistance: for heat resistances of the mayonnaises prepared from Examples 6 to 10 and Comparative Example 1, the mayonnaises were taken out to maintain a specific shape of a 3 g level onto a weighing dish using a tube for mayonnaise. The levels of shape retention and oil separation were measured at 75°C for 1 hour and at 100°C for 40 minutes by 10 minutes. The results thus obtained are listed in the following Table 3. In addition, after 60 minutes at 75°C, the changes in oil separation and shape retention of the mayonnaises prepared from Comparative Example 1 and Example 7 were photographed. The results thus obtained are illustrated in FIG. 4.

[Table 3]

| Division | Storage Tem. | 75°C | | | | | | 100°C | | | |
|---|---|---|---|---|---|---|---|---|---|---|---|
| | Time | 10 min. | 20 min. | 30 min. | 40 min. | 50 min. | 60 min. | 10 min. | 20 min. | 30 min. | 40 min. |
| Com. Example 1 | Shape retention | ◎ | ◎ | ○ | ○ | Δ | Δ | Δ | X | X | X |
| | Oil separation | - | + | + | ++ | +++ | +++ | ++++ | ++++ + | ++++ + | ++++ + |
| Example 6 | Shape retention | ◎ | ◎ | ◎ | ◎ | ◎ | ◎ | ◎ | ◎ | ◎ | ◎ |
| | Oil separation | - | - | - | - | - | - | - | - | - | - |

(continued)

| Division | Storage Tem. | 75°C | | | | | | 100°C | | | |
|---|---|---|---|---|---|---|---|---|---|---|---|
| | Time | 10 min. | 20 min. | 30 min. | 40 min. | 50 min. | 60 min. | 10 min. | 20 min. | 30 min. | 40 min. |
| Example 7 | Shape retention | ◎ | ◎ | ◎ | ◎ | ◎ | ◎ | ◎ | ◎ | ◎ | ◎ |
| | Oil separation | - | - | - | - | - | - | - | - | - | - |
| Example 8 | Shape retention | ◎ | ◎ | ◎ | ◎ | ◎ | ◎ | ◎ | ◎ | ◎ | ◎ |
| | Oil separation | - | - | - | - | - | - | - | - | - | - |
| Example 9 | Shape retention | ◎ | ◎ | ◎ | ◎ | ◎ | ◎ | ◎ | ◎ | ◎ | ◎ |
| | Oil separation | - | - | - | - | - | - | - | - | - | - |
| Example 10 | Shape retention | ◎ | ◎ | ◎ | ◎ | ◎ | ◎ | ◎ | ◎ | ◎ | ◎ |
| | Oil separation | - | - | - | - | - | - | - | - | - | - |

Shape retention: ⊙: A first state is maintained as it is, ○: The oil separation of the surface is observed, Δ: The oil separation of the surface is definitely observed, but is not flowed down. ×: The texture is completely melted down

Oil separation: - (Not occur), + (the oil separation is observed at the peripheral part), ++++ (the oil is completely isolated, and thus is everywhere). Scaling with 5 points.

As can be confirmed from the above results, in case of Comparative Example 1, the oil separation is seriously occurred and the shape retention is sharply decreased from 50 minutes or more at 75°C and 10 minutes or more at 100°C. However, in Examples 6 to 10, the first shape is maintained and also the oil separation is not observed at all periods and temperatures. The reason is that HPMC maintain a matrix shape and also water holding capacity and moisturizing ability at the temperatures above the gel point and flocculation point, thereby maintaining a product.

Cold resistance: each 30 g ($F_0$) of the mayonnaises prepared from Examples 6 to 10 and Comparative Example 1 was weighed into a 50 ml centrifugation tube, stored at -20°C for 120 hours, and then after thawing, the properties and the degrees of oil separation were observed. For the emulsion stability, the mayonnaises were centrifuged at 3,000 rpm for 1 hour with a centrifuge; the fat was removed from the supernatants thus separated; the weights ($F_1$) of the bottom precipitates were weighed; and then the ratios to be separated were calculated using the following Equation. The results thus obtained are listed in the following Table 4.

$$\text{Emulsion stability (\%)} = F_1/F_0 \times 100$$

[Table 4]

| | Com. Example 1 | Example 6 | Example 7 | Example 8 | Example 9 | Example 10 |
|---|---|---|---|---|---|---|
| Cold resistance | Obvious oil separation | Stable | Stable | Stable | Stable | Stable |
| Emulsion stability (%) | 94.79 | 100 | 100 | 100 | 100 | 100 |

From the above results, it can be confirmed that the mayonnaises (Examples) added with the HPMC and isolated soy protein have cold resistance, and with the viewpoint of the emulsion stability, the oil separations are not observed.

**Experimental Example 7: Measurements of complex viscosity, and G' and G" monitoring of mayonnaise**

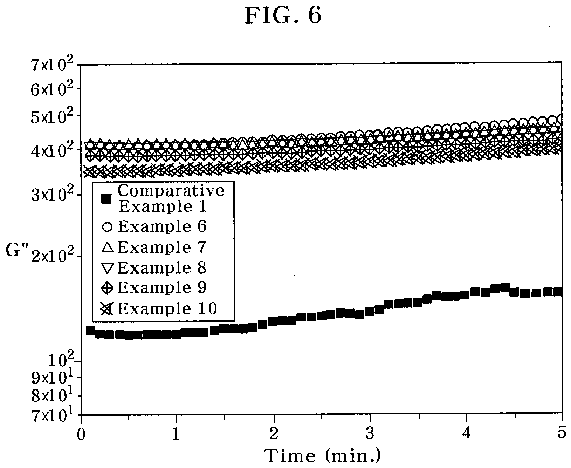

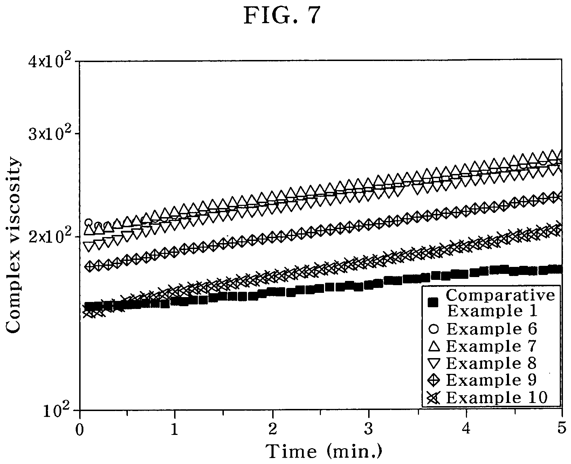

The viscosities and the values of G' and G" of the mayonnaises prepared from Examples 6 to 10 and Comparative Example 1 were measured by using a rheometer (manufactured by Anton paar, Model: MCR 301 (temperature: 20°C, Spindle: PP25-SN8402; [d = 1 mm], Amplitude gamma = 1%, Frequency f = 1 Hz, measuring time: measuring for 5 minutes by 0.1 second)). On the basis of the above measuring values, the storage modulus (G'), loss modulus (G"), and complex viscosity are illustrated in FIGS. 5 to 7.

In case of Examples 6 to 10, the storage modulus, loss modulus, complex viscosity, and viscosity exhibit a similar tendency. In all 5 of Examples, the similar physical properties (degree of elasticity, viscosity) are exhibited from the sensory test results. With the viewpoint of rheological characteristics at 20°C, a room temperature, it can be seen that the values of G' and G" of Examples are higher than those of Comparative Example. In addition, the values of G" in Examples are significantly increased as compared with Comparative Example, but the influences on the viscosity may be low. However, it can be confirmed that the values of G" that is flowability according to the viscosity variations are increased. From the above results, it can be seen that the shape retention at room temperature is greatly influenced by the variation of G' rather than the variation of G". In addition, all of Examples 6 to 10 exhibit excellent shape retention at room temperature, which is due to the fact that the values of the storage modulus and complex viscosity of Example is the same or higher the level of that of Comparative Example.

**Experimental Example 8: Mayonnaise calorie**

The calorie of mayonnaise was calculated using an Atwater index. At this time, the caloric values of the calorie nutrients are different at the time of combusting in a calorimeter and at the time of combusting in the body. In the calorimeter, per 1 g, 4.1 kcal, 9.45 kcal, and 5.65 kcal are generated in case of carbohydrate, fat, and protein, respectively. However, since during an absorption process, only 98% of carbohydrate, 95% of fat, and 92% of protein are absorbed on average, for the calorie generated at the time of actually taking in nutrients, per 1 g, 4 kcal, 9 kcal, and 4 kcal are generated in case of carbohydrate, fat, and protein, respectively. The following Table 5 exhibits general nutrient compositions per 100 g of the yellow and white of an egg, and an isolated soy protein.

[Table 5]

|  | Yellow of egg | White of egg | Isolated soy protein |
|---|---|---|---|
| Carbohydrate | 1.8g | 1.8g | 0.0g |
| Fat | 29.8g | 0.0g | 4.0g |
| Protein | 15.3g | 9.8g | 90.0g |

For the mayonnaises prepared in Examples 6 to 10 and Comparative Example 1, the calculated calories are listed in the following Table 6.

[Table 6]

| Content per 100g | | | | | | |
|---|---|---|---|---|---|---|
|  | Com. Example 1 | Example 6 | Example 7 | Example 8 | Example 9 | Example 10 |
| Calorie (kcal) | 749 | 400 | 400 | 359 | 400 | 396 |
| Carbohydrate (%) | 2.3 | 2.0 | 2.0 | 2.0 | 2.0 | 2.0 |
| Fat (%) | 82.4 | 40.0 | 40.0 | 35.0 | 40.0 | 40.0 |
| Protein (%) | 1.6 | 7.2 | 7.2 | 8.1 | 7.2 | 6.3 |

As can be confirmed from the above Table 6, in case of the vegetable low fat mayonnaise prepared using a fat substitute composed of an isolated soy protein and HPMC, the amount of vegetable oil used is decreased to 50 wt% or less, and thus its calorie is 400 kcal/100 g or less that is significantly lower than the calorie of the commercially available mayonnaise, that is 749 kcal/100 g. Especially, the content of protein is enhanced by 4.6 times or more compared to the conventional content of the protein, and thus the above vegetable low fat mayonnaise can impart the functionality of mayonnaise as a healthy food.

Cellulose ether, for example, hydroxypropylmethyl cellulose that is used as a fat substitute in the low fat mayonnaise composition according to the present invention is not digested in the body, and thus has no calories, thereby exhibiting excellent effect of dieting. In addition, the cellulose ether can prevent all sorts of adult diseases, such as circulatory diseases, for example, cardiocerebral apoplexy, arteriosclerosis, and the like, diabetes, and cancers.

In addition, the low fat mayonnaise composition according to the present invention can provide mayonnaise capable of minimizing cholesterol by not using an egg. Therefore, a demand for mayonnaise by patients having adult diseases, in which the patients have cholesterol resistance or a cholesterol intake is banned, can be caused, and the low fat mayonnaise can be edible by food-allergic patients, thereby increasing mayonnaise consumption.

In addition, the cellulose ether, for example, hydroxypropylmethyl cellulose used in the low fat mayonnaise composition according to the present invention can play a role as a fat substitute, and also can have a stable emulsification function. Therefore, since the cellulose ether can substitute for a fat in liquid foods, and thus can realize a physical property of strong emulsified liquid and impart a soft taste, low calorie/low fat foods can be developed when it is applied to sauces, diet drinks, ice creams, frozen desserts, and milk products, which are applied with the mayonnaise according to the present invention and whose emulsion stabilities are improved, in addition to mayonnaise.

In addition, since the mayonnaise produced by using cellulose ether as a fat substitute has excellent stability at a low temperature or high temperature as compared with the mayonnaise produced by adding 100% of pure vegetable oil, it can be used for developing various foods, such as bakeries and frozen foods.

Especially, the isolated soy protein used as an excipient in the low fat mayonnaise composition according to the present invention includes a soy protein that is the representative food capable of reducing cholesterol and preventing cardiovascular disorders. Therefore, it can reduce a negative health image of the mayonnaise having a great quantity of a fat and cholesterol.

## Claims

1. A low fat mayonnaise composition, comprising 20 to 50 wt% of vegetable oil, 1 to 2 wt% of sugar, 1 to 2 wt% of salt, 3 to 10 wt % of vinegar, 1 to 3 wt% cellulose ether, 5 to 10 wt% of an isolated soy protein, and water as the remainder with respect to the total weight of the composition,
   wherein the cellulose ether is hydroxypropylmethyl cellulose, and
   wherein the hydroxypropylmethyl cellulose has a structure, in which 19 to 30% of a methoxyl group and 4 to 20% of a hydroxypropyl group are substituted at a main chain of the cellulose..

2. The low fat mayonnaise composition of claim 1, further comprising a stabilizer.

3. The low fat mayonnaise composition of claim 2, wherein the stabilizer is one or more selected from the group consisting of xanthan gum, carrageenan, locust bean gum, guar gum, alginic acid, and agar, and is included in a range of 0.05 to 1 wt% with respect to the total weight of the mayonnaise composition.

4. A method of producing a low fat mayonnaise composition, the method comprising:

   hydrating cellulose ether and an excipient;
   wherein the cellulose ether is included in a range of 1 to 3 wt% with respect to the total weight of the mayonnaise composition,
   wherein the cellulose ether is hydroxypropylmethyl cellulose, and
   wherein the hydroxypropylmethyl cellulose has a structure, in which 19 to 30% of a methoxyl group and 4 to 20% of a hydroxypropyl group are substituted at a main chain of the cellulose, and

   wherein the excipient is included in a range of 1 to 20 wt% with respect to the total weight of the mayonnaise composition,
   mixing the hydrate thus obtained with an emulsion composed of 20 to 50 wt% of vegetable oil with respect to the total weight of the composition, and then primarily stirring;
   mixing the mixture primarily stirred with 1 to 2 wt% of sugar, 1 to 2 wt% of salt, 3 to 10 wt% of vinegar with respect to the total weight of the composition; and secondarily stirring the mixture thus obtained.

5. The method of claim 4, the method further comprising including 0.05 to 1 wt% of a stabilizer with respect to the total weight of the composition in the mixing of sugar, salt or vinegar.

6. The method of claim 5, wherein the hydrating of cellulose ether and excipient is performed by mixing and hydrating the excipient after hydrating the cellulose ether.

7. The method of claim 5, wherein the hydrating of cellulose ether and excipient is performed by hydrating after mixing the cellulose ether and the excipient in advance.


**Patentansprüche**

1. Fettarme Mayonnaisezusammensetzung, umfassend 20 bis 50 Gew.-% pflanzliches Öl, 1 bis 2 Gew.-% Zucker, 1 bis 2 Gew.-% Salz, 3 bis 10 Gew.-% Essig, 1 bis 3 Gew.-% Celluloseether, 5 bis 10 Gew.-% eines isolierten Sojaproteins und als Rest Wasser, und zwar in Bezug auf das Gesamtgewicht der Zusammensetzung, wobei der Celluloseether Hydroxypropylmethylcellulose ist, und wobei die Hydroxypropylmethylcellulose eine Struktur aufweist, in der 19 bis 30 % von einer Methoxylgruppe und 4 bis 20 % von einer Hydroxypropylgruppe an einer Hauptkette der Cellulose substituiert sind.

2. Fettarme Mayonnaisezusammensetzung nach Anspruch 1, ferner umfassend einen Stabilisator.

3. Fettarme Mayonnaisezusammensetzung nach Anspruch 2, wobei der Stabilisator einer oder mehrere ausgewählt aus der Gruppe ist, bestehend aus Xanthangummi, Carrageenan, Johannisbrotkernmehl, Guarkernmehl, Alginsäure und Agar, und er in einem Bereich von 0,05 bis 1 Gew.-% in Bezug auf das Gesamtgewicht der Mayonnaisezusammensetzung enthalten ist.

4. Verfahren zum Herstellen einer fettarm Mayonnaisezusammensetzung, wobei das Verfahren das Folgende umfasst:

   Hydratisieren von Celluloseether und einem Hilfsstoff;
   wobei der Celluloseether in einem Bereich von 1 bis 3 Gew.-% in Bezug auf das Gesamtgewicht der Mayonnaisezusammensetzung enthalten ist,
   wobei der Celluloseether Hydroxypropylmethylcellulose ist, und
   wobei die Hydroxypropylmethylcellulose eine Struktur aufweist, in der 19 bis 30 % von einer Methoxylgruppe und 4 bis 20 % von einer Hydroxypropylgruppe an einer Hauptkette der Cellulose substituiert sind, und

   wobei der Hilfsstoff in einem Bereich von 1 bis 20 Gew.-% in Bezug auf das Gesamtgewicht der Mayonnaisezusammensetzung enthalten ist,
   Mischen von dem auf diese Weise erhaltenen Hydrat mit einer Emulsion, die aus 20 bis 50 Gew.-% pflanzlichem Öl in Bezug auf das Gesamtgewicht der Zusammensetzung zusammengesetzt ist, und dann erstes Rühren;
   Mischen von der erstgerührten Mischung mit 1 bis 2 Gew.-% Zucker, 1 bis 2 Gew.-% Salz, 3 bis 10 Gew.-% Essig in Bezug auf das Gesamtgewicht der Zusammensetzung; und
   zweites Rühren von der auf diese Weise erhaltenen Mischung.

5. Verfahren nach Anspruch 4, wobei das Verfahren ferner das Umfassen von 0,05 bis 1 Gew.-% von einem Stabilisator in Bezug auf das Gesamtgewicht der Zusammensetzung bei dem Mischen von Zucker, Salz oder Essig umfasst.

6. Verfahren nach Anspruch 5, wobei das Hydratisieren von Celluloseether und Hilfsstoff durchgeführt wird, indem nach dem Hydratisieren des Celluloseethers der Hilfsstoff gemischt und hydratisiert wird.

7. Verfahren nach Anspruch 5, wobei das Hydratisieren von Celluloseether und Hilfsstoff durchgeführt wird, indem, nachdem der Celluloseether und der Hilfsstoff vorab gemischt wurden, hydratisiert wird.


**Revendications**

1. Composition de mayonnaise pauvre en matière grasse, comprenant de 20 à 50 % en poids d'huile végétale, de 1 à 2 % en poids de sucre, de 1 à 2 % en poids de sel, de 3 à 10 % en poids de vinaigre, de 1 à 3 % en poids d'éther de cellulose, de 5 à 10 % en poids d'une protéine de soja isolée, et de l'eau en tant que reste par rapport au poids total de la composition, dans laquelle l'éther de cellulose est de l'hydroxypropylméthylcellulose, et dans laquelle l'hydroxypropylméthylcellulose a une structure dans laquelle de 19 à 30 % d'un groupe méthoxyle et de 4 à 20 % d'un groupe hydroxypropyle sont substitués au niveau d'une chaîne principale de la cellulose.

2. Composition de mayonnaise pauvre en matière grasse selon la revendication 1, comprenant en outre un stabilisant.

**3.** Composition de mayonnaise pauvre en matière grasse selon la revendication 2, dans laquelle le stabilisant est un ou plusieurs choisis dans le groupe constitué de la gomme de xanthane, du carraghénane, de la gomme de caroube, de la gomme de guar, de l'acide alginique et de l'agar, et est inclus dans une plage de 0,05 à 1 % en poids par rapport au poids total de la composition de mayonnaise.

**4.** Procédé de production d'une composition de mayonnaise pauvre en matière grasse, le procédé comprenant :

l'hydratation de l'éther de cellulose et d'un excipient ;
dans lequel l'éther de cellulose est inclus dans une plage de 1 à 3 % en poids par rapport au poids total de la composition de mayonnaise,
dans lequel l'éther de cellulose est de l'hydroxypropylméthylcellulose, et
dans lequel l'hydroxypropylméthylcellulose a une structure dans laquelle de 19 à 30 % d'un groupe méthoxyle et de 4 à 20 % d'un groupe hydroxypropyle sont substitués au niveau d'une chaîne principale de la cellulose, et

dans lequel l'excipient est inclus dans une plage de 1 à 20 % en poids par rapport au poids total de la composition de mayonnaise,
le mélange de l'hydrate ainsi obtenu avec une émulsion composée de 20 à 50 % en poids d'huile végétale par rapport au poids total de la composition, et ensuite une agitation primaire ;
le mélange du mélange soumis à l'agitation primaire avec de 1 à 2 % en poids de sucre, de 1 à 2 % en poids de sel, de 3 à 10 % en poids de vinaigre par rapport au poids total de la composition ; et
l'agitation secondaire du mélange ainsi obtenu.

**5.** Procédé selon la revendication 4, le procédé comprenant en outre l'inclusion de 0,05 à 1 % en poids d'un stabilisant par rapport au poids total de la composition dans le mélange du sucre, du sel ou du vinaigre.

**6.** Procédé selon la revendication 5, dans lequel l'hydratation de l'éther de cellulose et de l'excipient est réalisée par mélange et hydratation de l'excipient après hydratation de l'éther de cellulose.

**7.** Procédé selon la revendication 5, dans lequel l'hydratation de l'éther de cellulose et de l'excipient est réalisée par hydratation après mélange de l'éther de cellulose et de l'excipient à l'avance.

# FIG. 1

Hydrating cellulose ether and excipient — S11

Mixing emulsion and primarily stirring the mixture thus obtained — S12

Mixing sugar, salt, or vinegar — S13

Secondarily stirring the mixture thus obtained — S14

## FIG. 2

## FIG. 3

## FIG. 4

COMPARATIVE
EXAMPLE 1

EXAMPLE 7

75°C 60min

## FIG. 5

FIG. 6

## FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 288012
- KR 217199
- KR 19950016982
- US 5759609 A
- KR 20100118800

### Non-patent literature cited in the description

- **CHUN.** *Korean J. Food Sci. Tech.,* vol. 27, 839-844